(19) Europäisches Patentamt / European Patent Office / Office européen des brevets

(11) **EP 3 145 793 B1**

(12) **EUROPÄISCHE PATENTSCHRIFT**

(45) Veröffentlichungstag und Bekanntmachung des Hinweises auf die Patenterteilung:
**14.08.2019   Patentblatt 2019/33**

(21) Anmeldenummer: **15718195.9**

(22) Anmeldetag: **17.04.2015**

(51) Int Cl.:
**B62D 15/02** (2006.01)     **B60Q 9/00** (2006.01)
**G01S 15/93** (2006.01)     **G01S 7/00** (2006.01)
**G01S 15/87** (2006.01)     **G08G 1/16** (2006.01)
**G05D 1/00** (2006.01)     **G01S 7/52** (2006.01)
**G05D 1/02** (2006.01)

(86) Internationale Anmeldenummer:
**PCT/EP2015/058382**

(87) Internationale Veröffentlichungsnummer:
**WO 2015/176884 (26.11.2015 Gazette 2015/47)**

(54) **PARKASSISTENZVORRICHTUNG FÜR EIN KRAFTFAHRZEUG**

PARKING ASSIST SYSTEM FOR A MOTOR VEHICLE

DISPOSITIF D'ASSISTANCE AU STATIONNEMENT POUR VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2014   DE 102014107305**

(43) Veröffentlichungstag der Anmeldung:
**29.03.2017   Patentblatt 2017/13**

(73) Patentinhaber: **Valeo Schalter und Sensoren GmbH**
**74321 Bietigheim-Bissingen (DE)**

(72) Erfinder:
• **CHEN, Jie**
**74321 Bietigheim-Bissingen (DE)**
• **KREYER, Steve**
**74321 Bietigheim-Bissingen (DE)**
• **SCHNEIDER, Ralf**
**74321 Bietigheim-Bissingen (DE)**

(74) Vertreter: **Pothmann, Karsten et al**
**Valeo Schalter und Sensoren GmbH**
**CDA-IP**
**Laiernstraße 12**
**74321 Bietigheim-Bissingen (DE)**

(56) Entgegenhaltungen:
EP-A2- 1 293 381          DE-A1-102011 084 366
US-A1- 2001 018 720     US-A1- 2003 034 883
US-A1- 2006 273 927     US-A1- 2010 259 420
US-A1- 2012 139 716

EP 3 145 793 B1

**Beschreibung**

Die Erfindung betrifft eine Parkassistenzvorrichtung für ein Kraftfahrzeug, bei der mittels mindestens eines Sensors ein von einer Relativposition eines fahrzeugexternen Objekts abhängiges Sensorsignal erzeugt und durch ein Steuergerät in Abhängigkeit von der Relativposition eine Aktoreinrichtung gesteuert wird. Mittels der Aktoreinrichtung wird der Fahrer informiert oder das Kraftfahrzeug geführt. Beispielsweise wird ein Warnton ausgegeben, wenn das fahrzeugexterne Objekt einen vorbestimmten Mindestabstand unterschreitet. Zu der Erfindung gehören auch ein Kraftfahrzeug mit der erfindungsgemäßen Parkassistenzvorrichtung sowie ein Verfahren zum Betreiben der Parkassistenzvorrichtung.

Aus dem Stand der Technik bekannte Parkassistenzvorrichtungen weisen in der Regel den beschriebenen mindestens einen Sensor, beispielsweise einen Ultraschallsensor, sowie das beschriebene Steuergerät auf, welches den Aktor zum Informieren des Fahrers oder Führen des Kraftfahrzeugs steuert. Mit zunehmender Anzahl der Sensoren und zunehmender Komplexität von deren Messsignalen kann das Problem entstehen, dass die Prozessorleistung eines solchen Steuergeräts nicht für die Verarbeitung der Sensorsignale und das gleichzeitige Steuern des Aktors ausreicht, insbesondere wenn nicht nur eine einfache Abstandswarnung, sondern beispielsweise eine vollständige automatische Einpark- oder Ausparkassistenz bereitgestellt werden soll.

Aus der DE 10 2006 056 838 A1 ist im Zusammenhang mit der Ansteuerung von Personenschutzmitteln, beispielsweise einem Airbag, ein Steuergerät bekannt, welches Sensorsignale von einer Umfeldkamera einerseits sowie einer Sensorbox andererseits empfängt. Um die komplexen Sensorsignale zu verarbeiten, weist das Steuergerät zwei Prozessoren auf, einen zum Verarbeiten der Bilddaten der Kamera, den anderen für die übrigen Berechnungen. Eine Verdrahtung für die Übertragung der komplexen Kameradaten ist dadurch gering gehalten, dass die Kamera unmittelbar am Gehäuse des Steuergeräts befestigt ist.

US2010/259420A1 offenbart ein Parkassistenzsystem umfassend eine Parkassistenz-ECU, die eine Parkassistenz ausführt um das Fahrzeug in einer Parklücke zu parken, eine Motor-ECU, die die Antriebskraft des Parkassistenzsystems steuert, und eine Lenkungs-ECU, die die Lenkrichtung und Lenkkraft des Fahrzeugs steuert.

Der Erfindung liegt die Aufgabe zugrunde, eine zuverlässig funktionierende Parkassistenz bereitzustellen.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Die erfindungsgemäße Parkassistenzvorrichtung für ein Kraftfahrzeug weist in der beschriebenen Weise mindestens einen Sensor auf, der dazu ausgelegt ist, ein von einer Relativposition eines fahrzeugexternen Objekts abhängiges Sensorsignal zu erzeugen. Das Objekt kann beispielsweise ein Fremdfahrzeug oder eines anderes Hindernis sein. Bei der erfindungsgemäßen Parkassistenzvorrichtung ist der mindestens eine Sensor an ein erstes Steuergerät angeschlossen, welches dazu ausgelegt ist, von dem mindestens einen Sensor dessen jeweiliges Sensorsignal zu empfangen und insgesamt auf der Grundlage jedes Sensorsignals Positionsdaten zu erzeugen, welche die Relativposition des fahrzeugexternen Objekts beschreiben. Das erste Steuergerät ist des Weiteren dazu ausgelegt, diese Positionsdaten über eine Kommunikationsverbindung des Kraftfahrzeugs auszusenden. Die erfindungsgemäße Parkassistenzvorrichtung weist nun des Weiteren zwar ein zweites Steuergerät auf, welches dazu ausgelegt ist, die Positionsdaten über die Kommunikationsverbindung zu empfangen und während eines Parkmanövers des Kraftfahrzeugs in Abhängigkeit von den Positionsdaten ein Steuersignal zum Steuern einer Aktoreinrichtung des Kraftfahrzeugs zu erzeugen und an die Aktoreinrichtung auszugeben.

Um das erste und das zweite Steuergerät für das Ermitteln des Zeitversatzes und/oder der Übertragungsdauer aufeinander abzustimmen, ist die Kommunikationsverbindung gemäß dem Precision-Time-Protokoll, PTP, durchgeführt.

Mit anderen Worten ist also durch die Erfindung eine Parkassistenzvorrichtung oder ein Parkassistenzsystem bereitgestellt, bei welchem Komponenten, nämlich der mindestens eine Sensor, das erste Steuergerät und das zweite Steuergerät, im Kraftfahrzeug verteilt angeordnet werden können und bei welchem die zum Verarbeiten der Sensordaten einerseits und zum Erzeugen des Steuersignals für die Aktoreinrichtung andererseits benötigte Prozessorleistung auf zwei Steuergeräte aufgeteilt ist. Durch diese Aufteilung ist in vorteilhafter Weise eine Reduktion der Auslastung der Steuergeräte möglich und zum anderen bei einem Defekt eines der Steuergeräte auch die Möglichkeit gegeben, Redundanz bereitzustellen, durch welche die Funktionen des ausgefallenen Steuergeräts durch das andere Steuergerät übernommen werden können. Hierdurch ist es in vorteilhafter Weise möglich, einen Zeitunterschied zwischen den Systemuhren der beiden Steuergeräte bis auf eine Mikrosekunde und weniger zu bestimmen.

Besonders vorteilhaft ist es, wenn auch der Fall berücksichtigt wird, dass eine Systemuhr des ersten Steuergeräts und eine Systemuhr des zweiten Steuergeräts nicht synchron laufen und/oder dass die Übertragung der Positionsdaten zwischen den Steuergeräten ebenfalls Zeit benötigt. Hierzu ist erfindungsgemäß vorgesehen, dass bei der Parkassistenzvorrichtung eine Synchronisationseinrichtung bereitgestellt ist, welche dazu ausgelegt ist, einen Zeitversatz zwischen der Systemuhr des ersten Steuergeräts und der Systemuhr des zweiten Steuergeräts zu ermitteln. Zusätzlich oder alternativ dazu kann die Synchronisationseinrichtung dazu ausgelegt sein, eine Übertragungsdauer der Übertragung der Positionsdaten über die Kommunikationsverbindung zu ermitteln. Eine geeignete Synchronisationseinrichtung kann beispielsweise durch ein Programmmodul in einem der Steuergeräte oder Programmmodule in beiden Steuergeräten realisiert werden.

Im Zusammenhang mit der Erfindung ist unter einem Steuergerät insbesondere eine Einbaueinheit mit einem eigenen Gehäuse zu verstehen, das insbesondere die Prozessoreinheit des Steuergeräts staubdicht und/oder spritzwasserdicht abschirmt. Bei dem mindestens einen Sensor kann es sich jeweils insbesondere um einen Ultraschallsensor oder einen Radarsensor handeln. Bevorzugt sind mindestens vier Sensoren bereitgestellt, beispielsweise vier, sechs, acht oder zwölf Sensoren. Bei einem Sensorsignal kann es sich um ein analoges Signal oder ein digitales Signal, also Sensorrohdaten, handeln. Die Positionsdaten können z.B. einen Abstand zu dem fahrzeugexternen Objekt und auch Abstände zu mehreren fahrzeugexternen Objekten angeben oder auch beispielsweise eine digitale Karte der Fahrzeugumgebung darstellen, in welcher das fahrzeugexterne Objekt oder mehrere fahrzeugexterne Objekte verzeichnet oder kartografiert sind.

Das Vorsehen von zwei Steuergeräten für eine Parkassistenz ist dahingehend nicht selbstverständlich, als dass das Steuersignal für die Aktoreinrichtung auch zu der aktuell gemessenen Relativposition des fahrzeugexternen Objekts passen muss. Hierzu sieht eine vorteilhafte Weiterbildung der Parkassistenzvorrichtung vor, dass das erste Steuergerät dazu ausgelegt ist, zu jeder Relativposition auch einen Zeitstempel über die Kommunikationsverbindung an das erste Steuergerät zu übertragen. Der Zeitstempel gibt den Erfassungszeitpunkt der Relativposition an. Dann kann im zweiten Steuergerät ermittelt werden, wie viel Zeit seit der Messung der Relativposition vergangen ist. Es ergibt sich zusätzlich der Vorteil, dass in dem zweiten Steuergerät beispielsweise anhand einer Serie von aufeinanderfolgenden Messungen von Relativpositionen zusammen mit dem Zeitstempel auch eine Geschwindigkeit auf Grundlage der Positionsdaten ermittelt werden kann und hierdurch eine Extrapolation möglich ist.

Ganz besonders vorteilhaft ist es, wenn das zweite Steuergerät dazu ausgelegt ist, von mindestens einem direkt an das zweite Steuergerät angeschlossenen weiteren Sensor direkt selbst ein Sensorsignal zu empfangen und daraus weitere Positionsdaten für das Erzeugen des Steuersignals zu erzeugen. Hierdurch kann die Position des fahrzeugexternen Objekts nun auf Grundlage sowohl der über die Kommunikationsverbindung empfangenen Positionsdaten als auch die durch das zweite Steuergerät selbst generierten weiteren Positionsdaten besonders genau geschätzt werden. Wird hierbei noch jeweils der Zeitstempel durch das erste Steuergerät übermittelt, so lassen sich die Positionsdaten und die weiteren Positionsdaten auch zeitsynchron kombinieren. Zusätzlich oder alternativ zu dem mindestens einen weiteren Sensor kann auch vorgesehen sein, dass das zweite Steuergerät dazu ausgelegt ist, anhand von Betriebsdaten des Kraftfahrzeugs, beispielsweise einer Rollgeschwindigkeit mindestens eines Rades des Kraftfahrzeugs und/oder einer GPS-Position (GPS - Global Positioning System), Bewegungsdaten einer Eigenbewegung des Kraftfahrzeugs zu ermitteln. Die Bewegungsdaten umfassen bevorzugt Odometriedaten. Diese Ausführungsform weist den Vorteil auf, dass zwischen den Messzeitpunkten der Relativposition anhand der Eigenbewegung des Kraftfahrzeugs eine Veränderung der Relativposition ermittelt werden kann. Auch hierbei ist es besonders vorteilhaft, einen Zeitstempel der Erfassungszeitpunkte der Relativpositionen zu berücksichtigen.

Besonders bevorzugt weist das erste und/oder das zweite Steuergerät jeweils eine Interruptroutine auf, die dazu ausgelegt ist, den Zeitversatz und/oder die Übertragungsdauer zu ermitteln. Hierdurch ergibt sich der Vorteil, dass das Ermitteln des Zeitversatzes und/oder der Übertragungsdauer nicht durch ein anderes Betriebsprogramm des Steuergeräts verzögert und damit verfälscht werden kann.

Ein weiterer Vorteil ergibt sich, wenn das erste und das zweite Steuergerät baugleiche Kommunikationsmodule zum Bereitstellen der Kommunikationsverbindung aufweisen. Mit anderen Worten ist die Hardwareausstattung der Steuergeräte zumindest in Bezug auf die Kommunikationsverbindung, also beispielsweise die verwendeten integrierten Schaltkreise und/oder deren Verschaltung, bei den beiden Steuergeräten gleich. Hierdurch ergibt sich der besondere Vorteil, dass eines der Steuergeräte die Verarbeitungsdauer von Kommunikationsdaten in dem anderen Steuergerät dadurch abschätzen kann, dass es die eigene Verarbeitungsdauer misst. Bei baugleichen Kommunikationsmodulen kann davon ausgegangen werden, dass auch das jeweils andere Steuergerät dieselbe Verarbeitungszeit benötigt.

Ganz besonders umfasst die Kommunikationsverbindung einen Kommunikations-Bus des Kraftfahrzeugs, insbesondere einen CAN-Bus (CAN - Controller Area Network) und/oder einen Flexray-Bus. Hierdurch ergibt sich der Vorteil, dass die Positionsdaten in deterministisch vorbestimmbaren Sendezyklen übertragen werden. Insbesondere der CAN-Bus sieht hierbei aber keine Synchronisationsmechanismen für die angeschlossenen Steuergeräte vor. Dazu ist in ganz besonders bevorzugter Ausführungsform der Erfindung vorgesehen, dass das erste und das zweite Steuergerät über den CAN-Bus für die beschriebene Synchronisation gemäß dem PTP kommunizieren. Das PTP ist eigentlich für ein paketorientiertes Kommunikationsnetzwerk, wie beispielsweise Ethernet, vorgesehen. Erfindungsgemäß wird nun das PTP in Verbindung mit der Bus-Kommunikation über einen CAN-Bus verwendet.

Gemäß einer Ausführungsform der Erfindung ist das zweite Steuergerät dazu ausgelegt, über die Kommunikationsverbindung zumindest einen Steuerbefehl zum Auslösen einer Messung der Relativposition an das erste Steuergerät auszusenden. Dann kann das zweite Steuergerät gezielt eine erneute Messung der Relativposition anstoßen oder auslösen, falls dies für die Steuerung der Aktoreinrichtung nötig ist. Bevorzugt wird hierbei zusammen mit dem Auslösebefehl auch ein Zeitstempel übermittelt, welcher den gewünschten Messzeitpunkt angibt.

In Bezug auf die verwendete Aktoreinrichtung sieht die erfindungsgemäße Parkassistenzvorrichtung eine Vielzahl von Ausführungsformen vor. Die Aktoreinrichtung kann einen Tongenerator zum Erzeugen eines Signaltons umfassen, sodass das zweite Steuergerät in Abhängigkeit von beispielsweise einem Objektabstand des fahrzeugexternen Objekts unterschiedliche Signaltöne, die sich in der Frequenz und/oder einer Pausenlänge unterscheiden, erzeugen kann. Die Aktoreinrichtung kann auch eine Anzeigeeinrichtung zum Darstellen eines Objektabstands des fahrzeugexternen Objekts aufweisen, also beispielsweise einen Bargraphen. Die Aktoreinrichtung kann auch dahingehend aktiv ausgelegt sein, dass sie eine Lenkeinrichtung umfasst, mittels welcher ein semi-automatisches Ein- und/oder Ausparken des Kraftfahrzeugs durchgeführt wird, indem der Fahrer zwar die Längsführung (Gas geben und Bremsen) durchführen muss, aber die Querführung (Lenken) durch die Lenkeinrichtung übernommen wird. Die Aktoreinrichtung kann auch eine Bremssteuerung zum Notbremsen bei Kollisionsgefahr umfassen. Die Aktoreinrichtung kann auch eine Parklückenerkennung und/oder eine Parklückenvermessung umfassen. Eine weitere Ausführungsform sieht vor, dass die Aktoreinrichtung eine Steuereinrichtung zum Durchführen eines autonomen Parkmanövers umfasst, bei welchem sich der Benutzer des Kraftfahrzeugs also auch außerhalb des Kraftfahrzeugs aufhalten kann, während dieses selbsttätig ein- oder ausgeparkt.

Entsprechend gehört zu der Erfindung auch ein Kraftfahrzeug, welches mindestens eine Parkassistenzvorrichtung gemäß einer Ausführungsform der erfindungsgemäßen Parkassistenzvorrichtung aufweist. Das erfindungsgemäße Kraftfahrzeug weist den Vorteil auf, dass die mindestens eine Parkassistenzvorrichtung in dem Kraftfahrzeug jeweils verteilt angeordnet sein kann und jeweils die Prozessorleistung zweier Steuergeräte zum Bereitstellen der Funktionalität der Parkassistenz bereitstehen. Hierdurch kann zum einen Redundanz und zum anderen eine erhöhte Prozessorleistung bereitgestellt werden.

Zu der Erfindung gehört auch ein Verfahren, welches sich beim Betrieb der erfindungsgemäßen Parkassistenzvorrichtung ergibt. Gemäß dem Verfahren wird bei einem Parkmanöver, bei welchem das Kraftfahrzeug ein- oder ausgeparkt wird, durch den mindestens einen Sensor der Parkassistenzvorrichtung jeweils ein von einer Relativposition eines fahrzeugexternen Objekts abhängiges Sensorsignal erzeugt und durch das erste Steuergerät der Parkassistenzvorrichtung von dem zumindest einen Sensor dessen jeweiliges Sensorsignal empfangen oder entgegengenommen und auf der Grundlage jedes Sensorsignals Positionsdaten erzeugt und die Positionsdaten über eine Kommunikationsverbindung des Kraftfahrzeugs ausgesendet. Bei den Positionsdaten handelt es sich um die beschriebenen Daten zum Beschreiben der Relativposition. Das zweite Steuergerät der Parkassistenzvorrichtung empfängt die Positionsdaten über die Kommunikationsverbindung und erzeugt in Abhängigkeit von den Positionsdaten ein Steuersignal zum Steuern der Aktoreinrichtung des Kraftfahrzeugs. Dieses Steuersignal wird an die Aktoreinrichtung ausgegeben. Das erfindungsgemäße Verfahren weist den Vorteil auf, dass nun die Funktionalität der Parkassistenz mit mehr als einem Steuergerät realisiert werden kann, sodass hierdurch Redundanz und/oder die kombinierte Prozessorleistung zweier Steuergeräte genutzt werden können.

Eine vorteilhafte Weiterbildung des Verfahrens sieht vor, dass zwischen dem ersten Steuergerät und dem zweiten Steuergerät über die Kommunikationsverbindung einmal oder mehrmals oder periodisch Synchronisationsdaten ausgetauscht werden und anhand der Synchronisationsdaten ein Zeitversatz zwischen Systemuhren der Steuergeräte und/oder eine Übertragungsdauer der Übertragung der Positionsdaten ermittelt wird. Durch Berücksichtigen des Zeitversatzes und/oder der Übertragungsdauer kann in vorteilhafter Weise im zweiten Steuergerät beim Steuern der Aktoreinrichtung berücksichtigt werden, ob eine durch die Positionsdaten beschriebene Relativposition noch aktuell ist oder ob durch eine Eigenbewegung des Kraftfahrzeugs oder des fahrzeugexternen Objekts eine andere Relativposition zugrundezulegen ist. Das periodische Übertragen von Synchronisationsdaten weist den besonderen Vorteil auf, dass auch eine Drift der Systemuhren berücksichtigt oder sogar ausgeglichen werden kann.

Zum Ermitteln der Übertragungsdauer kann eine sogenannte Round-Trip-Time gemessen werden. Hierzu sendet eines der Steuergeräte eine Anfragenachricht aus und misst den Sendezeitpunkt für diese Anfragenachricht. Das andere Steuergerät empfängt über die Kommunikationsverbindung diese Anfragenachricht und sendet eine Antwortnachricht zurück. Bei Empfang der zurückgesendeten Antwortnachricht kann dann die Empfangszeit ermittelt werden, und durch Vergleichen der Aussendezeiten mit der Empfangszeit ist die Zeitdauer für eine Hin- und eine Rückübertragung ermittelbar. Die Übertragungsdauer wird dann als halbe Round-Trip-Time geschätzt. Bei dieser Ausführungsform sind die beschriebenen Synchronisationsdaten also durch die Anfragenachricht und die Antwortnachricht gegeben.

Zum Ermitteln des Zeitversatzes ist bevorzugt folgendes Verfahren vorgesehen. Von einem der Steuergeräte, insbesondere dem ersten Steuergerät, wird eine Synchronisationsnachricht ausgesendet und hierbei der Aussendezeitpunkt gemessen. Dann wird eine Messnachricht mit dem Aussendezeitpunkt ebenfalls ausgesendet. Von dem anderen der Steuergeräte, insbesondere also dem zweiten Steuergerät, wird die Synchronisationsnachricht empfangen und hierbei der Empfangszeitpunkt gemessen. Dann wird auch die Messnachricht empfangen. Die Synchronisationsnachricht und die Messnachricht bilden hierbei Synchronisationsdaten. Der Zeitversatz zwischen den Systemuhren der Steuergeräte wird dann unter Berücksichtigung des Aussendezeitpunkts, des Empfangszeitpunkts und der Übertragungsdauer ermittelt. Die Übertragungsdauer wird dabei bevorzugt in der oben beschriebenen Weise geschätzt.

Auf Grundlage des ermittelten Zeitversatzes können beispielsweise die Systemuhren synchronisiert werden, indem eine der Synchronisationsuhren mittels des Zeitversatzes auf dieselbe Zeit wie die andere Systemuhr eingestellt wird.

Bevorzugt ist aber vorgesehen, dass das erste Steuergerät zumindest einen Zeitstempel, welcher in der beschriebenen Weise einen Erfassungszeitpunkt der Relativposition des fahrzeugexternen Objekts angibt, an das zweite Steuergerät aussendet. Das zweite Steuergerät berechnet dann aus jedem empfangenen Zeitstempel in Abhängigkeit von dem Zeitversatz und/oder der Übertragungsdauer einen virtuellen Zeitstempel, der dann bevorzugt der Relativposition zugeordnet wird. Hierdurch ergibt sich der Vorteil, dass die Systemuhren der Steuergeräte nicht verändert werden müssen, was einen stabilen Betrieb der Steuergeräte gewährleistet.

Im Folgenden ist ein Ausführungsbeispiel der Erfindung beschrieben. Dabei zeigen:

Fig. 1 eine schematische Darstellung einer Draufsicht einer Ausführungsform des erfindungsgemäßen Kraftfahrzeugs,

Fig. 2 ein Flussdiagramm zu einer Ausführungsform des erfindungsgemäßen Verfahrens, wie es in dem Kraftfahrzeug von Fig. 1 durchgeführt werden kann,

Fig. 3 ein Diagramm zur Veranschaulichung eines Austauschs von Synchronisationsdaten, wie er durch das Verfahren gemäß Fig. 2 durchgeführt werden kann,

Fig. 4 eine schematische Darstellung einer Parkassistenzvorrichtung, wie sie in dem Kraftfahrzeug von Fig. 1 eingebaut sein kann, und

Fig. 5 eine Prozessoreinrichtung eines Steuergeräts, wie es Bestandteil der Parkassistenzvorrichtung von Fig. 4 sein kann.

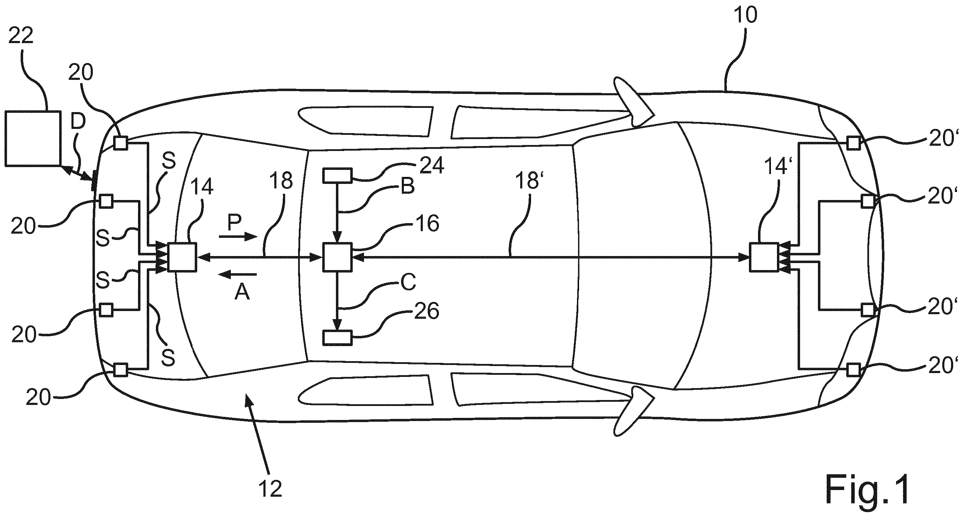

Fig. 1 zeigt ein Kraftfahrzeug 10, bei dem es sich beispielsweise um einen Kraftwagen, insbesondere einen Personenkraftwagen, handeln kann. Das Kraftfahrzeug 10 kann eine Parkassistenzvorrichtung oder ein Parkassistenzsystem oder kurz eine Parkassistenz 12 aufweisen. Die Parkassistenz 12 kann ein erstes Steuergerät 14 (ECU - Electronic Control Unit) und ein zweites Steuergerät 16 aufweisen, die über eine Kommunikationsverbindung 18, beispielsweise einen CAN-Bus, verbunden sein können.

Das erste Steuergerät 14 kann dazu ausgelegt sein, Sensorrohdaten S von an das erste Steuergerät 14 angeschlossenen Sensoren 20, insbesondere Ultraschallsensoren, zu verarbeiten und hierdurch auf der Grundlage der Sensorrohdaten S Positionsdaten P zu erzeugen, die beispielsweise eine Relativposition, wie beispielsweise einen Abstand D, des Kraftfahrzeugs 10 von einem fahrzeugexternen Objekt 22, beispielsweise einem Betonpfosten oder einem parkenden Fremdfahrzeug, beschreiben. Das erste Steuergerät 14 kann die Positionsdaten P über die Kommunikationsverbindung 18 an das zweite Steuergerät 16 übertragen.

Das zweite Steuergerät 16 kann eine Steuerlogik für eine Parkhilfe aufweisen. Das zweite Steuergerät 16 kann hierzu auch Betriebsdaten B von einer weiteren Datenquelle 24 des Kraftfahrzeugs 10, beispielsweise einem anderen Steuergerät oder einem Sensor, empfangen und auf der Grundlage der Betriebsdaten beispielsweise eine Odometriemessung für das Kraftfahrzeug 10 durchführen. Um die Parkhilfefunktionalität oder Parkassistenz für einen (nicht dargestellten) Fahrer des Kraftfahrzeugs 10 umzusetzen, kann das Steuergerät 16 eine Aktoreinrichtung 26 durch Erzeugen eines Steuersignals C, beispielsweise digitaler Steuerbefehle, steuern. Das Steuersignal C kann in Abhängigkeit von den Positionsdaten P und gegebenenfalls den Betriebsdaten B erzeugt werden. Das zweite Steuergerät 16 kann auch ein Auslösesignal A über die Kommunikationsverbindung 16 an das erste Steuergerät 14 aussenden, um eine Messung der Relativposition zum Objekt 22 auszulösen oder zu veranlassen.

Das Kraftfahrzeug 10 kann auch ein drittes Steuergerät 14' und ein oder mehrere weitere (nicht dargestellte) Steuergeräte aufweisen, wobei an das dritte Steuergerät 14' (und mögliche weitere Steuergeräte) weitere Sensoren 20' angeschlossen sein können, um eine Relativposition zu einem weiteren (nicht dargestellten) fahrzeugexternen Objekt zu erfassen. Das dritte Steuergerät 14' kann mit dem zweiten Steuergerät 16 über eine weitere Kommunikationsverbindung 16' gekoppelt sein. Im Folgenden wird der Übersichtlichkeit halber lediglich auf das erste Steuergerät 14 und das zweite Steuergerät 16, nicht aber auf die möglichen weiteren Steuergeräte 14' eingegangen. Die Erläuterungen gelten in entsprechender Weise für das dritte Steuergerät 14'.

Bei den Steuergeräten 14, 16 wird insbesondere eine Zeitsynchronisation über die Kommunikationsverbindung 18 durchgeführt, also insbesondere über einen CAN-Bus. Hierbei wird insbesondere das PTP zugrunde gelegt oder ein Kommunikationsprotokoll, welches Elemente aus dem PTP enthält, wobei aber eine Anpassung an einen CAN-Bus vorgenommen worden ist. Insbesondere wird die Bus-Laufzeit der Positionsdaten P über die Kommunikationsverbindung 18 betrachtet und hierdurch eine höhere Genauigkeit der Synchronisation von Zeitdaten, die in dem zweiten Steuergerät 16 verwendet werden, erreicht.

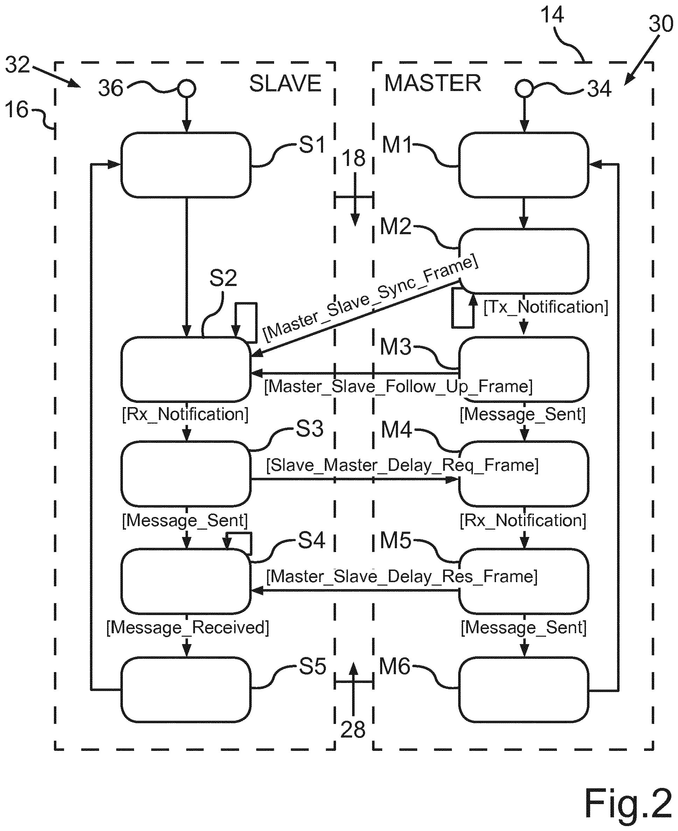

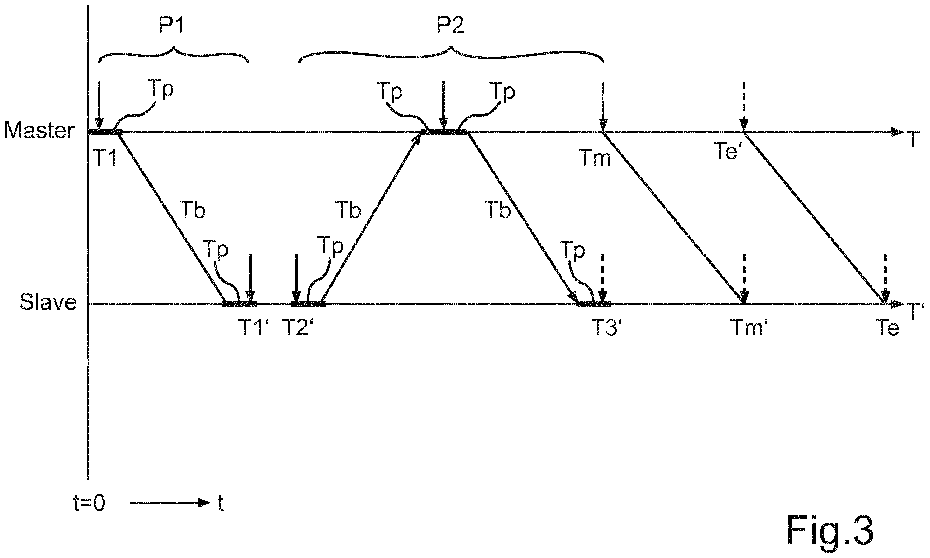

Das Synchronisationsverfahren ist im Folgenden anhand von Fig. 2 und Fig. 3 erläutert.

Fig. 2 zeigt das erste Steuergerät 14 und das zweite Steuergerät 16 sowie die Kommunikationsverbindung 18, über welche das erste Steuergerät 14 und das zweite Steuergerät 16 Synchronisationsdaten 28 austauschen. In dem ersten Steuergerät 14 ist ein Zustandsautomat oder kurz Automat 30 mit Zuständen M1, M2, M3, M4, M5, M6 bereitgestellt. In dem zweiten Steuergerät 16 ist ein Zustandsautomat oder kurz Automat 32 mit Zuständen S1, S2, S3, S4, S5 bereitgestellt. Mittels der beiden Automaten 30, 32 wird eine Synchronisationsprozedur realisiert, bei welcher das erste Steuergerät 14 einen Master bildet, welcher eine absolute Zeitangabe vorgibt, und das zweite Steuergerät 16 einen Slave, welcher die Zeitangabe vom Master übernimmt. Der Automat 30 wird durch eine Initialisierungsroutine 34 des ersten Steuergeräts 14, der Automat 32 durch eine Initialisierungsroutine 36 des zweiten Steuergeräts 16 initialisiert.

Für die folgenden Erläuterungen der Automaten 30 und 32 wird auch auf Fig. 3 verwiesen, in welcher entlang eines Zeitstrahls der Zeit t Messzeitpunkte angegeben sind, welche zum Ermitteln einer Übertragungszeit Tb, die für eine Datenübertragung über die Kommunikationsverbindung 18 benötigt wird, ermittelt wird, wobei eine Prozessierungszeit Tp von Kommunikationsnachrichten innerhalb des ersten Steuergeräts 14 und des zweiten Steuergeräts 16 berücksichtigt ist. Die Übertragungszeit Tb und die sender- und die empfängerseitige Prozessierungszeit Tp bilden zusammen die Übertragungsdauer Tdelay = 2 Tp + Tb.

Eine (nicht dargestellte) Systemuhr des Masters gibt die Zeit t als Systemzeit T und eine (nicht dargestellte) Systemuhr des Slaves gibt die Zeit t als Systemzeit T' an. Deren Synchronisation wird in zwei Phasen P1, P2 durchgeführt, wobei in der ersten Phase P1 ein erster Schätzwert für einen Zeitversatz To zwischen Systemuhren des Masters und des Slaves ermittelt wird, wobei die erste Schätzung auch die Übertragungsdauer Tdelay für die Kommunikation beinhaltet. In der zweiten Phase P2 wird nach Abschluss der Synchronisationsphase die Übertragungsdauer Tdelay ermittelt und daraufhin ein genauerer Wert für den Zeitversatz To ermittelt.

Durch eine Initialisierungsroutine 34 wird der Master in den Zustand M1 versetzt, in welchem er die Synchronisation startet. Im Zustand M1 kann der Master überwachen oder steuern, dass zwischen zwei Synchronisationszyklen jeweils eine vorbestimmte Zeitdauer vergeht, die beispielsweise in einem Bereich von 0,5 Sekunden bis 10 Sekunden, insbesondere 0,5 Sekunden bis 2 Sekunden, liegen kann, beispielsweise 1 Sekunde betragen kann. Sobald ein Synchronisationszyklus durchgeführt werden soll, wechselt der Master in den Zustand M2.

Durch eine Initialisierungsroutine 36 wird der Slave in den Zustand S1 gebracht, von wo aus der Slave selbsttätig in den Zustand S2 wechselt und auf Nachrichten vom Master wartet. Weitere Zustandsübergänge werden durch Ereignissignale Rx_Notification, Message_Sent, Tx_Notification, Message_Received gesteuert, die durch Sende- oder Empfangsvorgänge ausgelöst werden.

In der ersten Phase P1 des Synchronisationszyklus sendet der Master eine Synchronisationsnachricht Master_Slave_Sync_Frame an den Slave und notiert oder speichert den Aussendezeitpunkt T1 der Synchronisationsnachricht. Die Zeitmessung findet statt, sobald die Synchronisationsnachricht aus dem Kommunikationsmodul, das insbesondere ein CAN-Treiber ist, in die Kommunikationsverbindung 18 ausgesendet wird. Der Slave empfängt die Synchronisationsnachricht, was eine Zeitmessung der Empfangszeit T1' auslöst, die im Slave gespeichert wird.

Nachdem der Master die Synchronisationsnachricht ausgesendet hat, wird dies als Tx_Notification signalisiert und der Master wechselt in den Zustand M3, wo er eine Messnachricht Master_Slave_Follow_Up_Frame mit dem gemessenen Aussendezeitpunkt T1 als Sendedaten an den Slave überträgt. Diese Nachricht wird benötigt, da es einen Offset zwischen der CAN-Sendefunktion und dem exakten Sendezeitpunkt des CAN-Treibers geben kann. Der Slave auf der anderen Seite der Kommunikationsverbindung 18 speichert den empfangenen Aussendezeitpunkt T1 des Masters, welcher den genauen Aussendezeitpunkt der Synchronisationsnachricht beschreibt. Hierdurch ist die erste Phase beendet und es stehen zwei Zeitmessungen zur Verfügung, auf deren Grundlage der Zeitversatz grob geschätzt werden kann, wobei grobe Schätzung bedeutet, dass auch die noch unbekannte Übertragungsdauer Tdelay in der Schätzung enthalten ist. Es ergibt sich der Zeitversatz gemäß der folgenden Formel:

$$To = T1 - T1'.$$

Durch das Beenden der ersten Phase wird im Master in den Zustand M4 gewechselt, im Slave in den Zustand S3. In der zweiten Phase wird die Übertragungsdauer Tdelay ermittelt. Der Slave sendet hierzu eine Anfragenachricht Slave_Master_Delay_Req_Frame an den Master und ermittelt hierbei den Aussendezeitpunkt T2', der im Slave gespeichert wird. Der Slave wechselt dann vom Zustand S3 in den Zustand S4. Der Master empfängt die Nachricht und antwortet daraufhin mit einer Antwortnachricht Master_Slave_Delay_Res_Frame. Der Master wechselt hierzu vom Zustand M4 in den Zustand M5. Hier sollte eine möglichst kurze Verarbeitungsdauer im Master realisiert werden, was insbesondere auf der Grundlage von Interrupts erreicht werden kann.

Der Slave empfängt die Antwortnachricht und ermittelt den Empfangszeitpunkt T3'. Basierend auf dem Aussendezeitpunkt T2' und dem Empfangszeitpunkt T3' kann die Übertragungsdauer Tdelay gemäß der folgenden Formel ermittelt werden:

$$Tdelay = (T3' - T2')/2 = 2\,Tp + Tb.$$

Die Differenz T3' - T2' stellt die Round-Trip-Time Trrt dar.

Die entstehenden Verzögerungen lassen sich in programmbedingte Softwareverzögerungen und schaltungsbedingte Hardwareverzögerungen einteilen. Für den Fall, dass die Programme auf der Grundlage von Interrupts implementiert sind, kann die Softwareverzögerung konsistent in einem deterministisch vorhersagbaren Zeitintervall begrenzt werden. Besonders vorteilhaft ist es hierbei, wenn das erste Steuergerät 14 und das zweite Steuergerät 16 den gleich schaltungstechnischen Aufbau aufweisen, sodass im ersten Steuergerät 14 und im zweiten Steuergerät 16 die Prozessierungsdauer Tp als identisch angenommen werden kann. Falls unterschiedliche Hardware verwendet wird, müssen entsprechend zwei unterschiedliche Prozessierungsdauern Tp und Tp' zugrunde gelegt werden. Für die sich ergebende Übertragungsdauer Tdelay ergibt sich dann:

$$Tdelay = Tp' + Tp + Tb.$$

Im Slave steht nun ein Schätzwert für die Übertragungsdauer Tdelay und den Zeitversatz To zur Verfügung, mittels welchem der Slave eine Zeitangabe, die er vom Master empfängt, in eine Zeitangabe umrechnen kann, die sich an der Systemuhr des Slaves orientiert. Hierzu könnte der Slave beispielsweise eine Systemuhr entsprechend verstellen.

Ein anderes hier geeignetes Konzept, was sich einfacher realisieren lässt und auch insbesondere bei der Verwendung weiterer Steuergeräte, wie des dritten Steuergeräts 14', geeignet ist, ist das Umrechnen von Zeitstempeln, die vom Master empfangen wurden, in virtuelle Zeitstempel. Hierzu ist in Fig. 3 veranschaulicht, wie ein Zeitstempel Tm eines Messzeitpunktes, zu welchem der Master, nämlich das erste Steuergerät 14, die Sensorsignale S ausgewertet hat, das heißt die Sensoren 20 betrieben hat, auf Slave-Seite in einen virtuellen Zeitstempel Tm' umgerechnet werden kann:

$$Tm' = \begin{cases} Tm - \left| To - Tdelay \right|, & To < 0 \\ Tm - \left| To + Tdelay \right|, & To \geq 0 \end{cases}$$

Durch Verwenden virtueller Zeitstempel ist es auch möglich, einen Zeitstempel Te für einen Ausführungszeitpunkt einer bestimmten Routine im Slave für den Master in einen virtuellen Zeitstempel Te' umzurechnen.

Durch die genaue Angleichung von Zeitstempeln, die in den beiden Steuergeräten 14, 16 und auch weiteren Steuergeräten verarbeitet werden, kann eine Vernetzung eines einzelnen Masters mit mehreren Slaves sehr einfach und zuverlässig realisiert werden. Jeder Slave kann mit dem einzigen Master die beiden Simulationsphasen P1 und P2 durchführen und ihm stehen dann die nötigen Zeitmessungen zur Verfügung, um Zeitstempel zu virtualisieren.

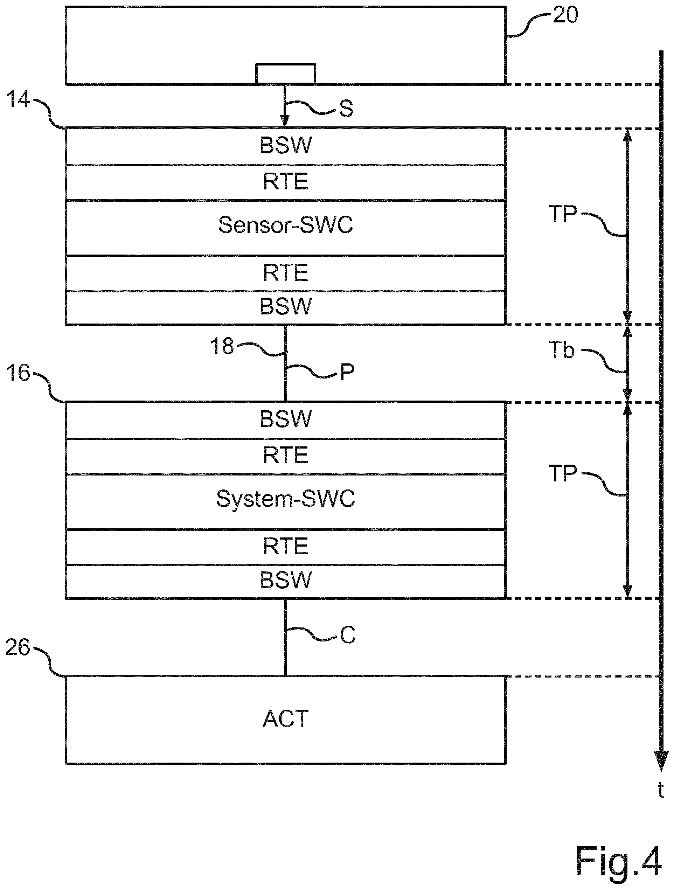

Im Folgenden ist beschrieben, wie bei dem Parkassistenzsystem 10 die Prozessierungsdauer Tp auf einen kleinen Wert eingestellt werden kann. Bei Steuergeräten, wie dem ersten Steuergerät 14 und dem zweiten Steuergerät 16, gibt es in der Regel das Problem, dass die eigentliche Nutz-Software auf einer oder mehreren Schichten von Betriebssoftware aufsetzt, wie in Fig. 4 veranschaulicht ist.

Fig. 4 zeigt, dass das erste Steuergerät 14 die Sensorsignale S der Sensoren 20 empfängt und die empfangenen Sensorsignale zunächst durch eine Schicht einer Basissoftware BSW und dann durch eine Schicht einer Run-Time-Environment RTE übertragen werden müssen, bevor die eigentliche Sensor-Software (Sensor-SWC) die Sensorsignale S verarbeiten kann und hieraus die Positionsdaten P berechnen kann. Zum Aussenden der Positionsdaten P muss die Sensor-Software die berechneten Positionsdaten durch die RTE-Schicht und die BSW-Schicht an den Treiber des Kommunikationsmoduls für die Übertragung über die Kommunikationsverbindung 18 reichen oder übermitteln. Insgesamt kann sich hieraus eine Verarbeitungsdauer TP ergeben, die wesentlich größer ist als die gewünschte Prozessierungsdauer Tp.

Entsprechend gilt auch in dem zweiten Steuergerät 16, dass die empfangenen Positionsdaten P durch eine Basissoftware BSW und ein Run-Time-Environment RTE an die eigentliche Steuerungslogik (System-SWC) zum Bereitstellen der Parkassistenz durchgeschleust werden müssen. Die in Abhängigkeit von den Positionsdaten P berechneten Steuerbefehle für die Aktoreinrichtung ACT 26 muss die Steuerungslogik ebenfalls wieder durch die RTE-Schicht und die BSW-Schicht zum Treiber eines Kommunikationsnetzwerks durchreichen. Auch hierbei ergibt sich wieder eine Prozessierungsdauer TP, die wesentlich größer als die gewünschte Prozessierungsdauer Tp ist.

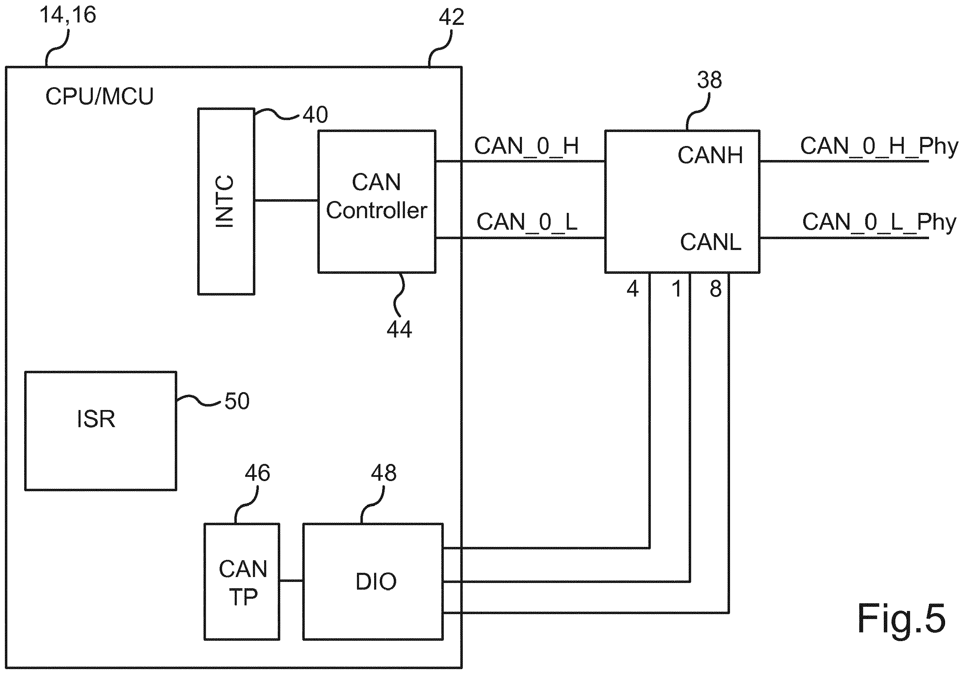

Um nun die Synchronisationsdaten 28 in einer möglichst kurzen Prozessierungsdauer Tp innerhalb des ersten Steuergeräts 16 und des zweiten Steuergeräts 18 zu verarbeiten, kann eine jeweilige Interruptroutine bereitgestellt werden. In Fig. 5 ist dies in Zusammenhang mit einem CAN-Bus-Controller beschrieben.

Fig. 5 zeigt, wie bei den Steuergeräten 14, 16 auf der Grundlage von Signalen eines Transceiver 30 ein Interrupt-Controller INTC 32 auf einer Platine 34 eines der Steuergeräte 14, 16 gesteuert werden kann. Die Platine 34 kann beispielsweise den zentralen Prozessor, das heißt die CPU, oder die Microcontroller Control Unit MCU des Steuergeräts 14, 16 aufweisen. Der Interrupt-Controller 32 kann mit dem Bus-Treiber CAN-Controller 36 gekoppelt sein, welcher mit den Sendeleitungen CAN_0_H und CAN_0_L des Transceivers 30 gekoppelt ist. Die in Fig. 5 gezeigte PIN-Belegung des Transceivers 30 entspricht derjenigen des bekannten Transceiver-Schaltkreises TJA1042.

Zum Aussenden der Synchronisationsdaten wird durch eine Protokollsteuerung 38 das CAN-Transport-Protokoll CAN-TP mittels einer digitalen Ein-Ausgabe DIO 40 über die dargestellten PINs mit dem Transceiver 30 ausgetauscht. Hierbei können der Sende- und Empfangszeitpunkt erkannt werden, was wiederum beim Interrupt-Controller 32 den Start einer Interrupt-Serviceroutine ISR auslöst, welche in einem Speicher 42 der Schaltung 34 gespeichert sein kann. Die Interrupt-Serviceroutine ISR kann dazu ausgelegt sein, ihren jeweiligen Auslösezeitpunkt zu speichern, wodurch dann die beschriebenen Zeitpunkte T1, T1', T2' und T3' ermittelt werden können.

Insgesamt ist durch das Beispiel gezeigt, wie mittels des Precision-Time-Protokolls (PTP) eine Zeitsynchronisation über einen CAN-Bus bereitgestellt werden kann.

**Patentansprüche**

1. Parkassistenzvorrichtung (12) für ein Kraftfahrzeug (10), aufweisend:

   - mindestens einen Sensor (20), der dazu ausgelegt ist, ein von einer Relativposition (D) eines fahrzeugexternen Objekts (22) abhängiges Sensorsignal (S) zu erzeugen,
   - ein erstes Steuergerät (14), an welches der mindestens eine Sensor (20) angeschlossen ist und welches dazu ausgelegt ist, von dem zumindest einen Sensor (20) dessen jeweiliges Sensorsignal (S) zu empfangen und auf der Grundlage jedes Sensorsignals (S) Positionsdaten (P), welche die Relativposition (D) des fahrzeugexternen Objekts (22) beschreiben, zu erzeugen und die Positionsdaten (P) über eine Kommunikationsverbindung (18) des Kraftfahrzeugs (10) auszusenden,
   - ein zweites Steuergerät (16), welches dazu ausgelegt ist, die Positionsdaten (P) über die Kommunikationsverbindung (18) zu empfangen und während eines Parkmanövers des Kraftfahrzeugs (10) in Abhängigkeit von den Positionsdaten (P) ein Steuersignal (C) zum Steuern einer Aktoreinrichtung (26) des Kraftfahrzeugs (10) zu erzeugen und an die Aktoreinrichtung (26) auszugeben,

   wobei eine Synchronisationseinrichtung (30, 32) bereitgestellt ist, welche dazu ausgelegt ist, einen Zeitversatz zwischen einer Systemuhr des ersten Steuergeräts (14) und einer Systemuhr des zweiten Steuergeräts (16) und/oder eine Übertragungsdauer (Tb) der Übertragung der Positionsdaten (P) über die Kommunikationsverbindung (18) zu ermitteln,
   **dadurch gekennzeichnet, dass**
   das erste und das zweite Steuergerät (14, 16) dazu ausgelegt sind, über die Kommunikationsverbindung (18) gemäß dem Precision-Time-Protokoll (PTP) zu kommunizieren.

2. Parkassistenzvorrichtung (12) nach Anspruch 1, **dadurch gekennzeichnet, dass** das erste Steuergerät (14) dazu ausgelegt ist, zu jeder Relativposition (D) einen Zeitstempel (Tm), welcher einen Erfassungszeitpunkt der Relativposition (D) angibt, über die Kommunikationsverbindung (18) an das zweite Steuergerät (16) zu übertragen.

3. Parkassistenzvorrichtung (12) nach einem der vorhergehenden Ansprüche, **dadurch gekennzeichnet, dass** das zweite Steuergerät (16) dazu ausgelegt ist,

   a) von mindestens einem direkt an das zweite Steuergerät (16) angeschlossenen weiteren Sensor (24) direkt ein Sensorsignal zu empfangen und daraus weitere Positionsdaten für das Erzeugen des Steuersignals (C) zu erzeugen und/oder
   b) anhand von Betriebsdaten (B) des Kraftfahrzeugs (10) zusätzliche Bewegungsdaten des Kraftfahrzeugs (10), insbesondere Odometriedaten, zu ermitteln.

4. Parkassistenzvorrichtung (12) nach einem der vorhergehenden Ansprüche, **dadurch gekennzeichnet, dass** das erste und/oder das zweite Steuergerät (14, 16) jeweils eine Interruptroutine (ISR) aufweist, die dazu ausgelegt ist, den Zeitversatz und/oder die Übertragungsdauer (Tb) zu ermitteln.

5. Parkassistenzvorrichtung (12) nach einem der vorhergehenden Ansprüche, **dadurch gekennzeichnet, dass** das erste und das zweite Steuergerät (14, 16) baugleiche Kommunikationsmodule (42) zum Bereitstellen der Kommunikationsverbindung (18) aufweisen.

6. Parkassistenzvorrichtung (12) nach einem der vorhergehenden Ansprüche, **dadurch gekennzeichnet, dass** die Kommunikationsverbindung (18) einen Kommunikationsbus des Kraftfahrzeugs (10), insbesondere einen CAN-Bus (18) und/oder einen Flexray-Bus, umfasst.

7. Parkassistenzvorrichtung (12) nach einem der vorhergehenden Ansprüche, **dadurch gekennzeichnet, dass** das zweite Steuergerät (16) dazu ausgelegt ist, über die Kommunikationsverbindung (18) zumindest einen Auslösebefehl (A) zum Auslösen einer Messung der Relativposition (P) an das erste Steuergerät (14) auszusenden.

8. Parkassistenzvorrichtung (12) nach einem der vorhergehenden Ansprüche, **dadurch gekennzeichnet, dass** die Aktoreinrichtung (26) einen Tongenerator zum Erzeugen eines Signaltons und/oder eine Anzeigeeinrichtung zum Darstellen eines Objektabstands des fahrzeugexternen Objekts und/oder eine Lenkeinrichtung für ein semi-automatisches Ein- und/oder Ausparken und/oder eine Bremssteuerung zum Notbremsen bei Kollisionsgefahr und/oder eine Parklückenerkennung und/oder Parklückenvermessung und/oder eine Steuereinrichtung zum Durchführen eines autonomen Parkmanövers umfasst.

9. Kraftfahrzeug (10) mit mindestens einer Parkassistenzvorrichtung (12) nach einem der vorhergehenden Ansprüche.

10. Verfahren zum Betreiben einer Parkassistenzvorrichtung (12) nach einem der Ansprüche 1 bis 8 in einem Kraftfahrzeug (10), **dadurch gekennzeichnet, dass** bei einem Parkmanöver, bei welchem das Kraftfahrzeug (10) ein- oder ausgeparkt wird,

- durch den mindestens einen Sensor (20) der Parkassistenzvorrichtung (12) jeweils ein von einer Relativposition (T) eines fahrzeugexternen Objekts (22) abhängiges Sensorsignal erzeugt (S) wird und
- durch das erste Steuergerät (14) der Parkassistenzvorrichtung (12) von dem zumindest einen Sensor (22) dessen jeweiliges Sensorsignal (S) empfangen und auf der Grundlage jedes Sensorsignals (S) Positionsdaten (P) erzeugt und die Positionsdaten (P) über eine Kommunikationsverbindung (18) des Kraftfahrzeugs (10) ausgesendet werden und
- durch das zweite Steuergerät (16) der Parkassistenzvorrichtung (12) die Positionsdaten (P) über die Kommunikationsverbindung (18) empfangen werden und in Abhängigkeit von den Positionsdaten (P) ein Steuersignal (C) zum Steuern einer Aktoreinrichtung (26) des Kraftfahrzeugs (10) erzeugt und an die Aktoreinrichtung (26) ausgegeben wird.

11. Verfahren nach Anspruch 10, **dadurch gekennzeichnet, dass** zwischen dem ersten Steuergerät (14) und dem zweiten Steuergerät (16) über die Kommunikationsverbindung (18) einmal oder mehrmals oder periodisch Synchronisationsdaten (28) ausgetauscht werden und anhand der Synchronisationsdaten (28) ein Zeitversatz zwischen Systemuhren der Steuergeräte (14, 16) und/oder eine Übertragungsdauer (Tb) der Übertragung von Positionsdaten (P) ermittelt wird.

12. Verfahren nach Anspruch 11, **dadurch gekennzeichnet, dass** zum Ermitteln der Übertragungsdauer (Tb) eine Round-Trip-Time gemessen und die Übertragungsdauer als halbe Round-Trip-Time geschätzt wird und zum Ermitteln des Zeitversatzes

- von einem der Steuergeräte, insbesondere dem ersten Steuergerät (14), eine Synchronisationsnachricht ausgesendet, hierbei der Aussendezeitpunkt (T1) gemessen und dann eine Messnachricht mit dem Aussendezeitpunkt (T1) ausgesendet wird und
- von dem anderen der Steuergeräte, insbesondere dem zweiten Steuergerät (16), die Synchronisationsnachricht empfangen und hierbei der Empfangszeitpunkt (T1') gemessen und dann die Messnachricht empfangen wird und der Zeitversatz unter Berücksichtigung des Aussendezeitpunkts (T1), des Empfangszeitpunkts (T1') und der Übertragungsdauer (Tb) ermittelt wird.

13. Verfahren nach Anspruch 11 oder 12, **dadurch gekennzeichnet, dass** durch das erste Steuergerät (14) zumindest einen Zeitstempel (Tm), welcher einen Erfassungszeitpunkt der Relativposition (D) des fahrzeugexternen Objekts (22) angibt, über die Kommunikationsverbindung (18) an das zweite Steuergerät (16) ausgesendet wird und das zweite Steuergerät (16) in Abhängigkeit von dem Zeitstempel (Tm) und von dem Zeitversatz und/oder der Übertragungsdauer einen virtuellen Zeitstempel (Tm') berechnet.

**Claims**

1. Parking assistance apparatus (12) for a motor vehicle (10), having:

   - at least one sensor (20) that is designed to produce a sensor signal (S) that is dependent on a relative position (D) of a vehicle-external object (22),
   - a first controller (14) to which the at least one sensor (20) is connected and that is designed to receive from the at least one sensor (20) the respective sensor signal (S) thereof and to take each sensor signal (S) as a basis for producing position data (P) that describe the relative position (D) of the vehicle-external object (22) and to output the position data (P) via a communication link (18) of the motor vehicle (10),
   - a second controller (16) that is designed to receive the position data (P) via the communication link (18) and, during a parking manoeuvre of the motor vehicle (10), to take the position data (P) as a basis for producing a control signal (C) for controlling an actuator device (26) of the motor vehicle (10) and to output said control signal to the actuator device (26), wherein a synchronization device (30, 32) is provided that is designed to ascertain a time offset between a system clock of the first controller (14) and a system clock of the second controller (16) and/or to ascertain a transmission period (Tb) for the transmission of the position data (P) via the communication link (18),

   **characterized in that**
   the first and second controllers (14, 16) are designed to use the communication link (18) to communicate in accordance with the precision time protocol (PTP).

2. Parking assistance apparatus (12) according to Claim 1, **characterized in that** the first controller (14) is designed to transmit, for each relative position (D), a time stamp (Tm), which indicates a time of capture of the relative position (D), to the second controller (16) via the communication link (18).

3. Parking assistance apparatus (12) according to either of the preceding claims, **characterized in that** the second controller (16) is designed

   a) to receive a sensor signal directly from at least one further sensor (24) connected directly to the second controller (16) and to produce further position data therefrom for producing the control signal (C) and/or
   b) to use operating data (B) of the motor vehicle (10) to ascertain additional motion data of the motor vehicle (10), particularly odometry data.

4. Parking assistance apparatus (12) according to one of the preceding claims, **characterized in that** the first and/or second controller(s) (14, 16) has (have) a respective interrupt routine (ISR) that is designed to ascertain the time offset and/or the transmission period (Tb).

5. Parking assistance apparatus (12) according to one of the preceding claims, **characterized in that** the first and second controllers (14, 16) have communication modules (42) of the same design for providing the communication link (18).

6. Parking assistance apparatus (12) according to one of the preceding claims, **characterized in that** the communication link (18) comprises a communication bus of the motor vehicle (10), particularly a CAN bus (18) and/or a FlexRay bus.

7. Parking assistance apparatus (12) according to one of the preceding claims, **characterized in that** the second controller (16) is designed to use the communication link (18) to transmit at least one initiation command (A) for initiating a measurement of the relative position (P) to the first controller (14).

8. Parking assistance apparatus (12) according to one of the preceding claims, **characterized in that** the actuator device (26) comprises a tone generator for producing a signal tone and/or a display device for presenting an object distance of the vehicle-external object and/or a steering device for semi-automatic parking and/or parking space exit and/or a brake controller for emergency braking when there is a risk of collision and/or a parking space identifier and/or parking space surveyor and/or a control device for performing an autonomous parking manoeuvre.

**9.** Motor vehicle (10) having at least one parking assistance apparatus (12) according to one of the preceding claims.

**10.** Method for operating a parking assistance apparatus (12) according to one of Claims 1 to 8 in a motor vehicle (10), **characterized in that** a parking manoeuvre in which the motor vehicle (10) is parked or taken out of a parking space involves

- the at least one sensor (20) of the parking assistance apparatus (12) producing a respective sensor signal (S) that is dependent on a relative position (T) of a vehicle-external object (22), and
- the first controller (14) of the parking assistance apparatus (12) receiving from the at least one sensor (22) the respective sensor signal (S) thereof and taking each sensor signal (S) as a basis for producing position data (P) and outputting the position data (P) via a communication link (18) of the motor vehicle (10), and
- the second controller (16) of the parking assistance apparatus (12) receiving the position data (P) via the communication link (18) and taking the position data (P) as a basis for producing a control signal (C) for controlling an actuator device (26) of the motor vehicle (10) and outputting said control signal to the actuator device (26).

**11.** Method according to Claim 10, **characterized in that** the first controller (14) and the second controller (16) have synchronization data (28) interchanged between them via the communication link (18) once or repeatedly or periodically, and the synchronization data (28) are used to ascertain a time offset between system clocks of the controllers (14, 16) and/or to ascertain a transmission period (Tb) for the transmission of position data (P).

**12.** Method according to Claim 11, **characterized in that** the transmission period (Tb) is ascertained by measuring a round trip time and estimating the transmission period as half the round trip time, and the time offset is ascertained by virtue of

- one of the controllers, particularly the first controller (14), transmitting a synchronization message, in so doing measuring the transmission time (T1) and then transmitting a measurement message with the transmission time (T1), and
- the other of the controllers, particularly the second controller (16), receiving the synchronization message and in so doing measuring the reception time (T1') and then receiving the measurement message and ascertaining the time offset by taking into consideration the transmission time (T1), the reception time (T1') and the transmission period (Tb).

**13.** Method according to Claim 11 or 12, **characterized in that** the first controller (14) transmits at least one time stamp (Tm), which indicates a time of capture of the relative position (D) of the vehicle-external object (22), to the second controller (16) via the communication link (18), and the second controller (16) takes the time stamp (Tm) and the time offset and/or the transmission period as a basis for computing a virtual time stamp (Tm').

**Revendications**

**1.** Arrangement d'assistance au stationnement (12) pour un véhicule automobile (10), comprenant :

- au moins un capteur (20) qui est conçu pour générer un signal de capteur (S) dépendant d'une position relative (D) d'un objet (22) externe au véhicule,
- un premier contrôleur (14) auquel est raccordé l'au moins un capteur (20) et qui est conçu pour recevoir, de la part de l'au moins un capteur (20), son signal de capteur (S) respectif et, sur la base de chaque signal de capteur (S), générer des données de position (P) qui décrivent la position relative (D) de l'objet (22) externe au véhicule et envoyer les données de position (P) par le biais d'une liaison de communication (18) du véhicule automobile (10),
- un deuxième contrôleur (16), qui est conçu pour recevoir les données de position (P) par le biais de la liaison de communication (18) et, pendant une manoeuvre de stationnement du véhicule automobile (10), en fonction des données de position (P), générer un signal de commande (C) destiné à commander un dispositif actionneur (26) du véhicule automobile (10) et le délivrer au dispositif actionneur (26),

un dispositif de synchronisation (30, 32) étant fourni, lequel est conçu pour déterminer un décalage dans le temps entre une horloge système du premier contrôleur (14) et une horloge système du deuxième contrôleur (16) et/ou une durée de transmission (Tb) de la transmission des données de position (P) par le biais de la liaison de communication (18),

**caractérisé en ce que**
le premier et le deuxième contrôleur (14, 16) sont conçus pour communiquer par le biais de la liaison de communication (18) conformément au protocole d'horloges distribuées (PTP - Precision Time Protocol).

2. Arrangement d'assistance au stationnement (12) selon la revendication 1, **caractérisé en ce que** le premier contrôleur (14) est conçu pour transmettre au deuxième contrôleur (16), par le biais de la liaison de communication (18), un horodatage (Tm) pour chaque position relative (D), lequel indique un instant d'acquisition de la position relative (D).

3. Arrangement d'assistance au stationnement (12) selon l'une des revendications précédentes, **caractérisé en ce que** le deuxième contrôleur (16) est conçu pour a) recevoir un signal de capteur directement d'au moins un capteur supplémentaire (24) raccordé directement au deuxième contrôleur (16) et, à partir de celui-ci, générer des données de position supplémentaires pour la génération du signal de commande (C) et/ou b) à l'aide de données opérationnelles (B) du véhicule automobile (10), déterminer des données de mouvement supplémentaires du véhicule automobile (10), notamment des données d'odométrie.

4. Arrangement d'assistance au stationnement (12) selon l'une des revendications précédentes, **caractérisé en ce que** le premier et/ou le deuxième contrôleur (14, 16) possède respectivement une routine d'interruption (ISR) qui est conçue pour déterminer le décalage dans le temps et/ou la durée de transmission (Tb) .

5. Arrangement d'assistance au stationnement (12) selon l'une des revendications précédentes, **caractérisé en ce que** le premier et le deuxième contrôleur (14, 16) possèdent des modules de communication (42) de construction identique destinés à fournir la liaison de communication (18).

6. Arrangement d'assistance au stationnement (12) selon l'une des revendications précédentes, **caractérisé en ce que** la liaison de communication (18) comprend un bus de communication du véhicule automobile (10), notamment un bus CAN (18) et/ou un bus Flexray.

7. Arrangement d'assistance au stationnement (12) selon l'une des revendications précédentes, **caractérisé en ce que** le deuxième contrôleur (16) est conçu pour envoyer au premier contrôleur (14), par le biais de la liaison de communication (18), au moins une instruction de déclenchement (A) destinée à déclencher une mesure de la position relative (P).

8. Arrangement d'assistance au stationnement (12) selon l'une des revendications précédentes, **caractérisé en ce que** le dispositif actionneur (26) comprend un générateur de ton destiné à générer un ton de signalisation et/ou un dispositif d'affichage destiné à représenter un écart d'objet de l'objet externe au véhicule et/ou un dispositif de direction pour une entrée en et/ou une sortie de stationnement semi-automatique et/ou une commande de frein servant au freinage d'urgence en cas de risque de collision et/ou une reconnaissance d'emplacement de stationnement et/ou une mesure d'emplacement de stationnement et/ou un dispositif de commande destiné à accomplir une manoeuvre de stationnement autonome.

9. Véhicule automobile (10) comprenant au moins un arrangement d'assistance au stationnement (12) selon l'une des revendications précédentes.

10. Procédé pour faire fonctionner un arrangement d'assistance au stationnement (12) selon l'une des revendications 1 à 8 dans un véhicule automobile (10), **caractérisé en ce que** lors d'une manoeuvre de stationnement, lors de laquelle le véhicule automobile (10) est entré en ou sorti de stationnement,

- un signal de capteur (S) qui dépend d'une position relative (T) d'un objet (22) externe au véhicule est respectivement généré (S) par l'au moins un capteur (20) de l'arrangement d'assistance au stationnement (12) et
- le signal de capteur (S) respectif de l'au moins un capteur (20) est reçu par le premier contrôleur (14) de l'arrangement d'assistance au stationnement (12) et, sur la base de chaque signal de capteur (S), des données de position (P) sont générées et les données de position (P) sont envoyées par le biais d'une liaison de communication (18) du véhicule automobile (10) et
- les données de position (P) sont reçues par le deuxième contrôleur (16) de l'arrangement d'assistance au stationnement (12) par le biais de la liaison de communication (18) et, en fonction des données de position (P), un signal de commande (C) destiné à commander un dispositif actionneur (26) du véhicule automobile (10) est généré et délivré au dispositif actionneur (26).

**11.** Procédé selon la revendication 10, **caractérisé en ce que** des données de synchronisation (28) sont échangées une fois, ou plusieurs fois, ou périodiquement entre le premier contrôleur (14) et le deuxième contrôleur (16) par le biais de la liaison de communication (18) et un décalage dans le temps entre les horloges système des contrôleurs (14, 16) et/ou une durée de transmission (Tb) de la transmission des données de position (P) est déterminé(e) à l'aide des données de synchronisation (28).

**12.** Procédé selon la revendication 11, **caractérisé en ce que** pour déterminer la durée de transmission (Tb), un temps aller-retour est mesuré et la durée de transmission est estimée égale à la moitié du temps aller-retour et, pour déterminer le décalage dans le temps,

- un message de synchronisation est envoyé par l'un des contrôleurs, notamment par le premier contrôleur (14), l'instant d'envoi (T1) est ici mesuré et ensuite un message de mesure comprenant l'instant d'envoi (T1) est envoyé, et
- le message de synchronisation est reçu par l'autre contrôleur, notamment le deuxième contrôleur (16), et l'instant de réception (T1') est ici mesuré et ensuite le message de mesure est reçu et le décalage dans le temps est déterminé en tenant compte de l'instant d'envoi (T1), de l'instant de réception (T1') et de la durée de transmission (Tb).

**13.** Procédé selon la revendication 11 ou 12, **caractérisé en ce qu'**au moins un horodatage (Tm), lequel indique un instant d'acquisition de la position relative (D) de l'objet (22) externe au véhicule, est envoyé par le premier contrôleur (14) au deuxième contrôleur (16) par le biais de la liaison de communication (18) et le deuxième contrôleur (16) calcule un horodatage virtuel (Tm') en fonction de l'horodatage (Tm) et du décalage dans le temps et/ou de la durée de transmission.

Fig.1

EP 3 145 793 B1

Fig.2

Fig.3

EP 3 145 793 B1

Fig.4

Fig.5

EP 3 145 793 B1

**IN DER BESCHREIBUNG AUFGEFÜHRTE DOKUMENTE**

**In der Beschreibung aufgeführte Patentdokumente**

- DE 102006056838 A1
- US 2010259420 A1